# EUROPEAN PATENT SPECIFICATION

(11) **EP 4 120 085 B1**
(45) Date of publication and mention of the grant of the patent: **22.01.2025**
(21) Application number: 22182876.7
(22) Date of filing: 04.07.2022
(51) Int. Cl.: G06F 11/36, G06F 8/41, G06F 11/07

(54) **FAILURE ANALYSIS SUPPORT DEVICE AND FAILURE ANALYSIS SUPPORT METHOD**
FEHLERANALYSEUNTERSTÜTZUNGSVORRICHTUNG UND FEHLERANALYSEUNTERSTÜTZUNGSVERFAHREN
DISPOSITIF DE SUPPORT D'ANALYSE DE DÉFAILLANCE ET PROCÉDÉ DE SUPPORT D'ANALYSE DE DÉFAILLANCE

(30) Priority: 12.07.2021 JP 2021114875
(43) Date of publication of application: 18.01.2023
(73) Proprietor: Hitachi, Ltd., Tokyo 100-8280 (JP)
(72) Inventor: PHAN, Thi Thanh Huyen, Tokyo, 100-8280 (JP); SATO, Naoto, Tokyo, 100-8280 (JP)
(74) Representative: Mewburn Ellis LLP

(56) References cited:
- CN-A- 106 294 156
- US-A1- 2012 304 153
- US-A1- 2013 031 531
- US-A1- 2020 057 856

## Description

### CROSS-REFERENCE TO RELATED APPLICATION

This application claims priority pursuant to Japanese patent application No. 2021-114875, filed on July 12, 2021, .

### BACKGROUND

### Technical Field

The present invention relates to a failure analysis support device and a failure analysis support method.

### Related Art

Among various types of software, for example, embedded control software controls industrial equipment, and the like, and occurrence of failures is directly linked to manufacturing quality such as yield and recall.

Thus, when the software is developed, a failure is identified before release, and a test is performed to correct the failure. In this test, an input and an output in the software are created in advance as a test case, and it is confirmed whether the software returns a correct output that is assumed for the input of the test case.

In a case where a failure is found in such a test, a developer analyzes in which part of the software unexpected processing has been performed, specifies a cause part and corrects logic of a program so that appropriate input and output are performed.

As related art related to verification of such a failure, a technique of evaluating from specifications of the software component, how a failure in a software component propagates (see JP-A-2012-128727) has been proposed.

This technique is a method for evaluating reliability of a software component in which a computer having a model format verification function executes: a specification information acquisition step of acquiring specification information including an input interface specification, an output interface specification, and an internal specification of the software component; a verification step of verifying the software component by the format verification function in accordance with specification information obtained by changing the input interface specification in the specification information to a value other than a normal value; and a failure propagation path storage step of storing an input obtained by changing the value other than the normal value and an output not satisfying the output interface specification in association with each other in a case where an example of an output value not satisfying the output interface specification is found in the verification step.

In a control program that calculates an output from an input, most inputs are correctly processed, but there is a case where unauthorized processing is performed under a very rare condition. Such a failure is called a non-reproducibility failure, and it is difficult to specify a rare condition in which the failure occurs.

According to the related art, it is expected to effectively avoid appearance of such a state and to make failure analysis efficient. However, there remains a problem in addressing a case where information on many failures is included in a log to be used for failure analysis, that is, a case where many failures occur simultaneously.

For example, in order to sequentially analyze failures one by one, only one failure is analyzed and corrected at a time. In that case, for example, even if analysis and correction are performed to address a failure A included in a certain function, a failure B included in the same function needs to be analyzed and corrected again, and there is a possibility that duplicated analysis and correction are performed for the failure.

In addition, in a state in which different functions cooperate with each other, in a case where there is a relationship in which failures held by the respective functions are linked with each other, if correction of one failure is performed with content inconsistent with correction of the other failure, there is a possibility that the other failure will appear again. Such a problem becomes more serious in a case where each person in charge analyzes and corrects a failure without recognizing other failures and analysis results and correction content thereof performed by persons other than the person in charge.
US2012304153A1 proposes a context-sensitive analysis framework using value flows. US20200057856A1 proposes a system and methods of detecting software vulnerabilities in computer program by analyzing the compiled code and optionally the source code the computer program.

### SUMMARY

It is therefore an object of the present invention to provide a technique capable of effectively avoiding duplication of analysis and correction with respect to a plurality of failures included in one program and supporting consistent correction.

A failure analysis support device of the present invention, as defined in claim 1, that solves the above problems includes: a storage device configured to store a source code of software to be processed; and an arithmetic device configured to execute processing of regenerating occurrence paths of all failures on a basis of the source code, processing of merging the occurrence paths of all the failures and generating a failure occurrence graph in which information on variable definitions and usage in the occurrence paths is integrated, processing of searching for an instance corresponding to a failure relationship pattern defined in advance for a relationship between failures in the failure occurrence graph, and processing of outputting a result of the search to a predetermined device.

In addition, in a failure analysis support method of the present invention, as defined in claim 4, an information processing device stores a source code of software to be processed in a storage device, and executes processing of regenerating occurrence paths of all failures on a basis of the source code, processing of merging the occurrence paths of all the failures to generate a failure occurrence graph in which information of variable definitions and usage in the occurrence paths is integrated, processing of searching for an instance corresponding to a failure relationship pattern defined in advance for a relationship between failures in the failure occurrence graph, and processing of outputting a result of the search to a predetermined device Further preferred embodiments of the invention are defined in the sub-claims.

According to the present invention, regarding a plurality of failures included in one program, it is possible to effectively avoid duplication of analysis and correction and to support consistent correction.

### BRIEF DESCRIPTION OF DRAWINGS

Fig. 1 is a system configuration diagram including a failure analysis support device according to the present embodiment.
Fig. 2 is a view illustrating a hardware configuration example of the failure analysis support device according to the present embodiment.
Fig. 3 is a view illustrating a flow example of a failure analysis support method according to the present embodiment.
Fig. 4 is a view illustrating an example of a source code according to the present embodiment.
Fig. 5 is a view illustrating an example of concept of failure occurrence path regeneration according to the present embodiment.
Fig. 6 is a view illustrating a flow example of the failure analysis support method according to the present embodiment.
Fig. 7A is a view illustrating a flow example of the failure analysis support method according to the present embodiment.
Fig. 7B is a view illustrating an example of a symbol execution analysis route according to the present embodiment.
Fig. 8 is a view illustrating an example of the symbol execution analysis route according to the present embodiment.
Fig. 9 is a view illustrating an example where failure information is integrated into target functions according to the present embodiment.
Fig. 10 is a view illustrating an example of an execution path according to the present embodiment.
Fig. 11 is a view illustrating an example of a failure occurrence path according to the present embodiment.
Fig. 12 is a view illustrating a flow example of the failure analysis support method according to the present embodiment.
Fig. 13 is a view illustrating a code example according to the present embodiment.
Fig. 14 is a view illustrating an example where a failure occurrence path is extracted according to the present embodiment.
Fig. 15 is a view illustrating an example of a failure occurrence graph according to the present embodiment.
Fig. 16 is a view illustrating a flow example of the failure analysis support method according to the present embodiment.
Fig. 17 is a view illustrating a flow example of the failure analysis support method according to the present embodiment.
Fig. 18 is a view illustrating an example of the failure occurrence graph according to the present embodiment.
Fig. 19A is a view illustrating an example of a failure relationship pattern according to the present embodiment.
Fig. 19B is a view illustrating an example of the failure relationship pattern according to the present embodiment.
Fig. 19C is a view illustrating an example of the failure relationship pattern according to the present embodiment.
Fig. 20 is a view illustrating a calculation example of data correlation according to the present embodiment.
Fig. 21 is a view illustrating a result display example according to the present embodiment.
Fig. 22 is a view illustrating a result display example according to the present embodiment.

### DETAILED DESCRIPTION OF EMBODIMENTS

### <Configuration including failure analysis support device>

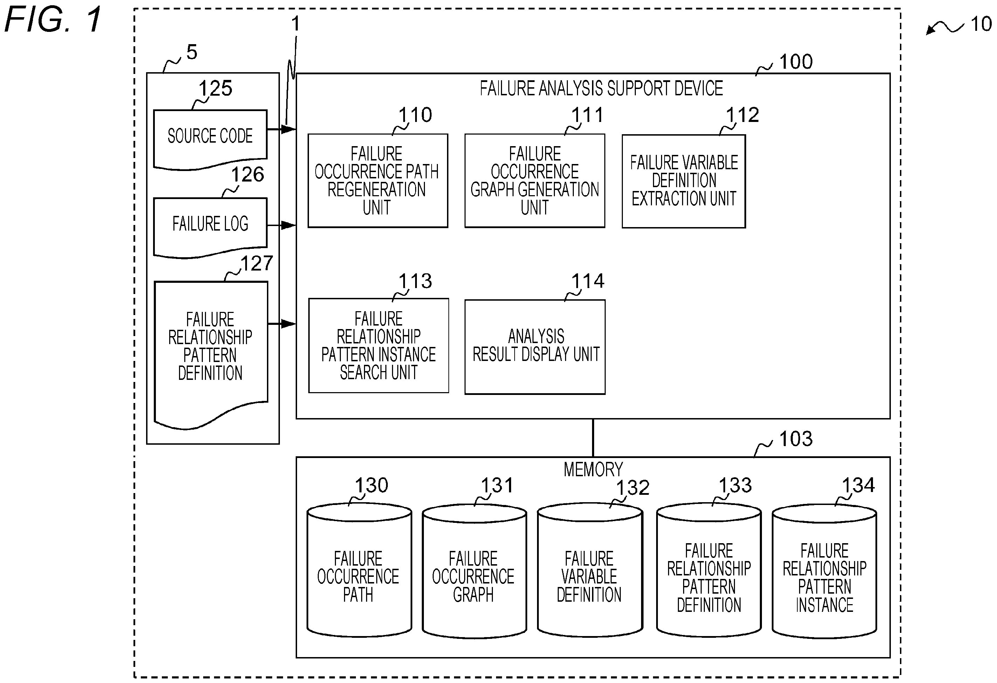

An embodiment of the present invention will be described in detail below using the drawings. Fig. 1 is a configuration diagram of a system including a failure analysis support device 100 according to the present embodiment. The failure analysis support device 100 illustrated in Fig. 1 is a computer capable of effectively avoiding duplication of analysis and correction with respect to a plurality of failures included in one program and supporting consistent correction.

As illustrated in Fig. 1, the failure analysis support device 100 of the present embodiment is communicably connected to a terminal 5 connected via an appropriate interface 1 (or a communication line). Thus, these may be collectively referred to as a failure analysis support system 10.

The failure analysis support device 100 can also be said to be, for example, a server that provides a failure analysis support service operated by a business operator responsible for system development, a vendor supporting the business operator, or the like.

The failure analysis support device 100 acquires information on a source code 125, a failure log 136, and a failure relationship pattern definition 127 from the terminal 5 and stores various kinds of information 130 to 134 generated on the basis of the information in a storage device 101 of the failure analysis support device 100. Various kinds of information 130 to 134 are, for example, a failure occurrence path 130, a failure occurrence graph 131, a failure variable definition 132, a failure relationship pattern definition 133, and a failure relationship pattern instance 134. These will be described later.

The failure analysis support device 100 includes functional units such as a failure occurrence path regeneration unit 110, a failure occurrence graph generation unit 111, a failure variable definition extraction unit 112, a failure relationship pattern instance search unit 113, and an analysis result display unit 114.

Among these, the failure occurrence path regeneration unit 110 is a functional unit that regenerates occurrence paths 130 of all failures on the basis of the source code 125 obtained from the terminal 5. The failure occurrence paths 130 regenerated in this way are temporarily stored in a memory 103.

In addition, the failure occurrence graph generation unit 111 is a functional unit that merges the occurrence paths 130 of all the failures generated by the failure occurrence path regeneration unit 110 described above and generates the failure occurrence graph 131 in which information on variable definitions and usage in the occurrence paths 130 is integrated. The failure occurrence graph 131 generated in this manner is temporarily stored in the memory 103. It is assumed that the failure occurrence graph generation unit 111 uses the information on the variable definition 132 and the usage in the failure data extracted by the failure variable definition extraction unit 112 for the integration.

The failure relationship pattern instance search unit 113 is a functional unit that searches for an instance corresponding to the failure relationship pattern definition 133 in the failure occurrence graph 131 described above. The failure relationship pattern definition 133 is the failure relationship pattern 127 obtained from the terminal 5 and stored in the memory 103 and is a definition related to a relationship between failures.

In addition, the analysis result display unit 114 serves as a functional unit that outputs a result of the search by the failure relationship pattern instance search unit 113 described above to the terminal 5 or a predetermined output interface.

On the other hand, the terminal 5 is a terminal to be used by a person in charge of a business operator who uses the above-described failure analysis support service. Specifically, a personal computer, a smartphone, a tablet terminal, or the like, can be assumed.

### <Hardware configuration>

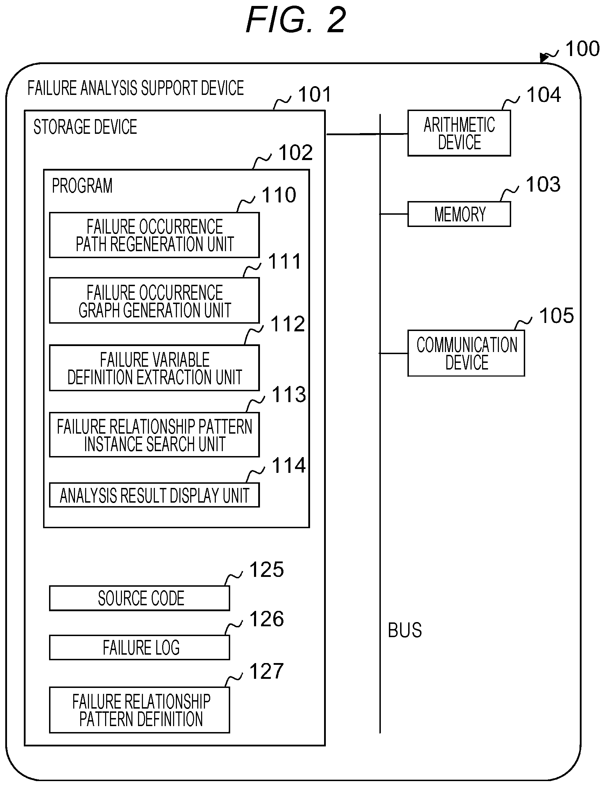

The hardware configuration of the failure analysis support device 100 of the present embodiment is as follows in Fig. 2.

In other words, the failure analysis support device 100 includes the storage device 101, the memory 103, the arithmetic device 104, and the communication device 105.

Among these, the storage device 101 includes an appropriate non-volatile storage element such as a solid state drive (SSD) and a hard disk drive.

Further, the memory 103 includes a volatile storage element such as a RAM.

In addition, the arithmetic device 104 is a CPU that executes a program 102 stored in the storage device 101 by reading the program to the memory 103, performs integrated control of the device itself and performs various kinds of determination, calculation, and control processing. Functional units obtained by executing the program 102 are the above-described failure occurrence path regeneration unit 110, failure occurrence graph generation unit 111, failure variable definition extraction unit 112, failure relationship pattern instance search unit 113, and analysis result display unit 114.

Furthermore, the communication device 105 is assumed to be a network interface card, or the like, that is connected to a network 1 and is responsible for communication processing with the terminal 5.

Note that, in a case where the failure analysis support device 100 is standalone machine, it is preferable to further include an input device that receives key input or voice input from a user, and an output device such as a display that displays processing data.

In addition to the program 102 for implementing functions necessary as the failure analysis support device of the present embodiment, at least the source code 125, the failure log 126, and the failure relationship pattern definition 127 obtained from the terminal 5 are stored in the storage device 101.

### <Flow example: main flow>

Hereinafter, actual procedure of the failure analysis support method in the present embodiment will be described with reference to the drawings. Various kinds of operation corresponding to the failure analysis support method which will be described below are implemented by a program to be read out to the memory, or the like, and executed by the failure analysis support device 100. The program includes codes for performing various kinds of operation which will be described below.

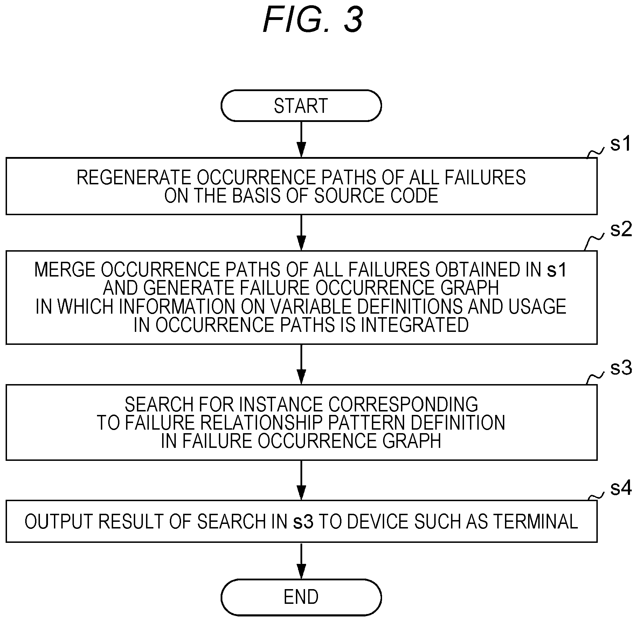

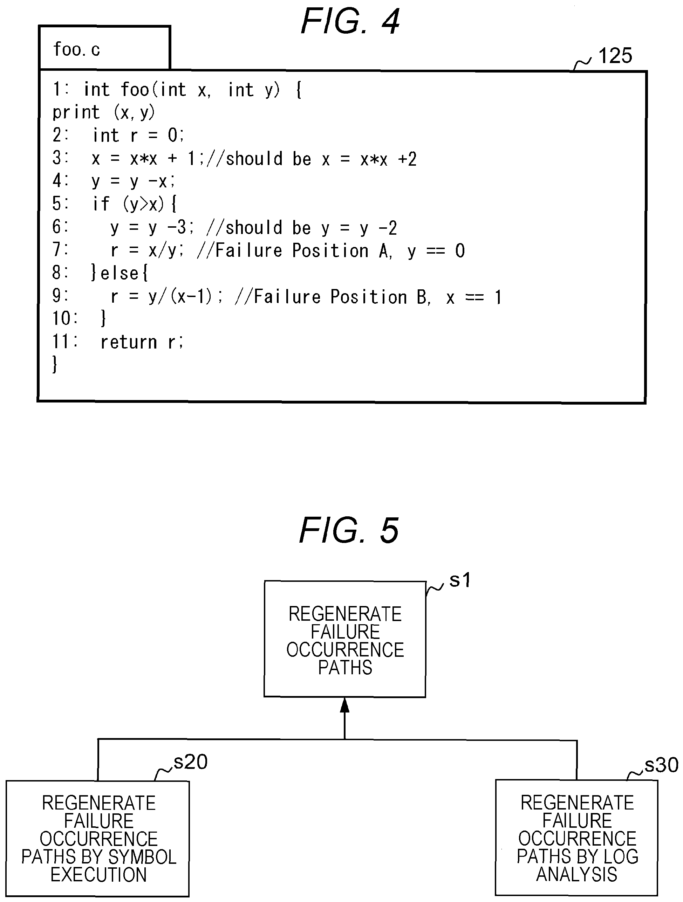

Fig. 3 is a view illustrating a flow example of the failure analysis support method according to the present embodiment. In this case, the failure analysis support device 100 regenerates the occurrence paths 130 of all failures on the basis of the source code 125 (see Fig. 4) (s1) .

Subsequently, the failure analysis support device 100 merges the occurrence paths 130 of all the failures obtained in s1 and generates the failure occurrence graph 131 in which information on the variable definitions 132 and usage in the occurrence paths 130 is integrated (s2).

In addition, the failure analysis support device 100 searches for an instance corresponding to the failure relationship pattern definition 133 in the above-described failure occurrence graph 131 (s3).

Further, the failure analysis support device 100 outputs a result of the search in s3 to a device such as the terminal 5 (s4) and ends the processing.

### <Flow example: failure occurrence path regeneration by symbol execution>

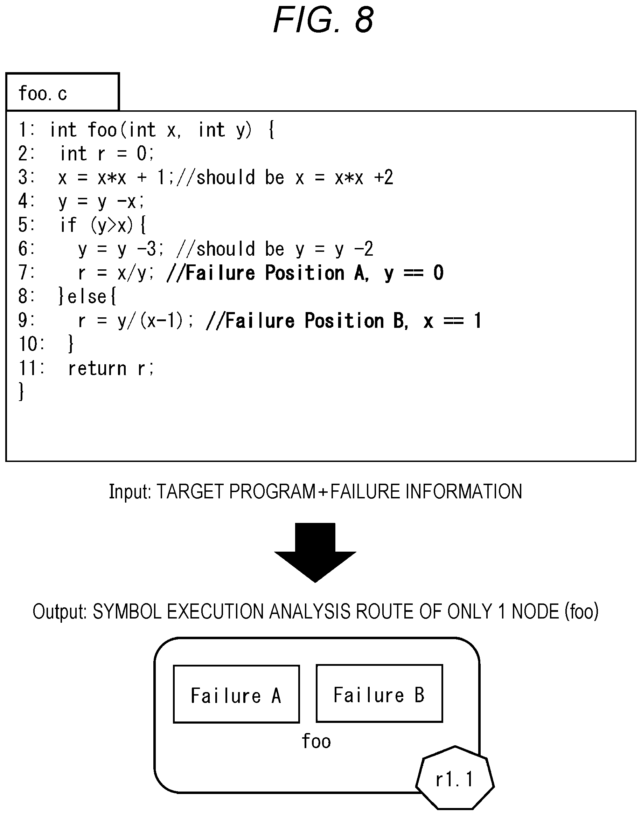

Next, failure occurrence path regeneration processing by symbol execution constituting the failure occurrence path regeneration (s1) in the above-described main flow will be described with reference to Figs. 5 to 11. Here, the generation (s2) of the failure occurrence graph 131 will also be described.

In this case, the failure occurrence path regeneration unit 110 calculates a symbol execution analysis route that passes through all target functions, which are functions including failure positions, using a function calling relationship in the target source code 125 (s21).

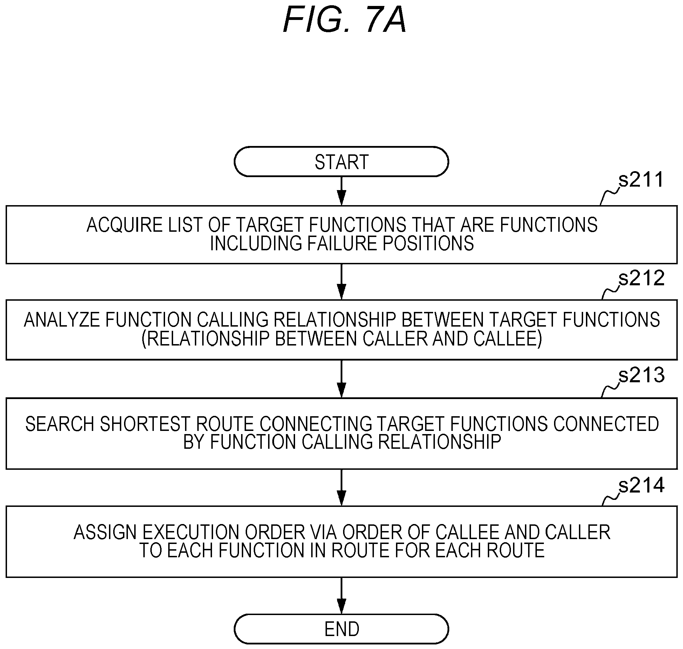

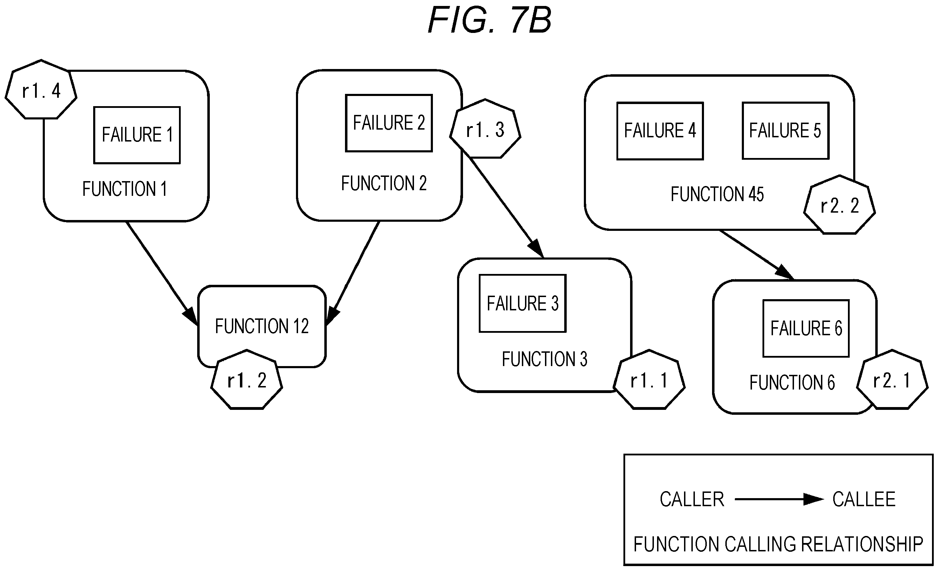

Details of s21 will be illustrated in the example of the flow in Fig. 7A and the symbol execution analysis route in Fig. 7B. In the flow in Fig. 7A, the failure occurrence path regeneration unit 110 acquires a list of target functions that are functions including the failure positions (s211).

In addition, the failure occurrence path regeneration unit 110 analyzes a function calling relationship (a relationship between a caller and a callee) between the target functions (s212).

Subsequently, the failure occurrence path regeneration unit 110 searches for the shortest route connecting the target functions connected by the function calling relationship (s213).

In addition, the failure occurrence path regeneration unit 110 assigns an execution order via an order of the callee and the caller to each function in the route for each route obtained in s213 (s214) and ends the processing.

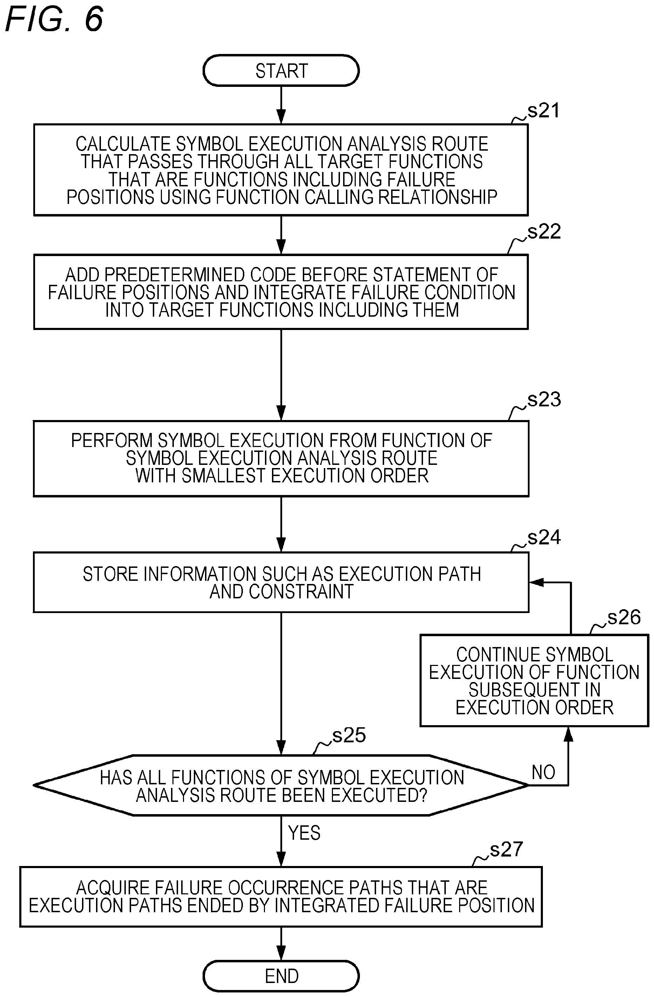

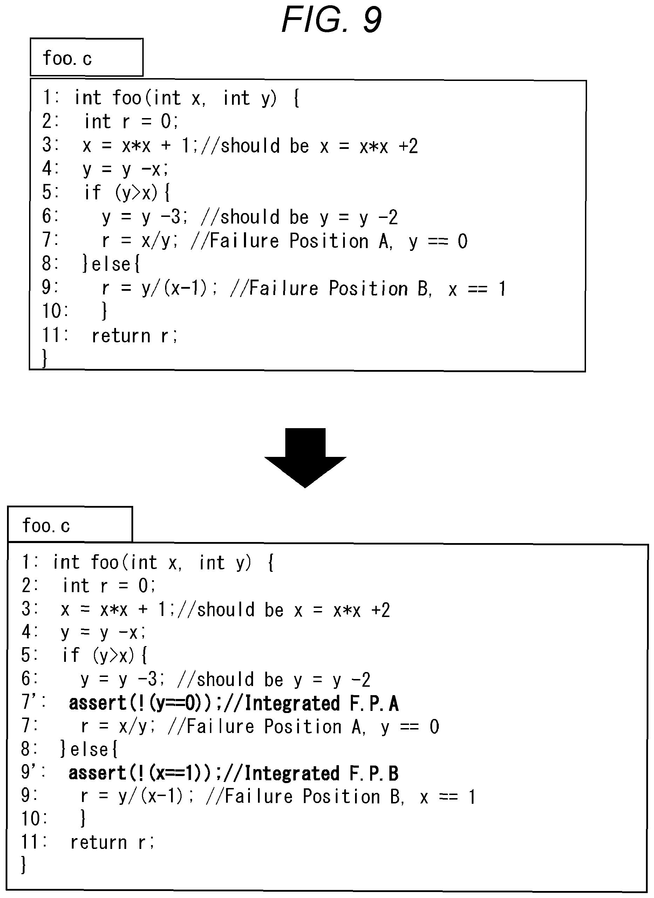

Here, the description returns to the flow of Fig. 6. In this case, the failure occurrence path regeneration unit 110 adds, for example, a code of "assert (!failure condition)" before statement of the failure positions (see Fig. 9) and integrates a failure condition into the target functions including them (s22). The positions of the code added here are referred to as an integrated failure position.

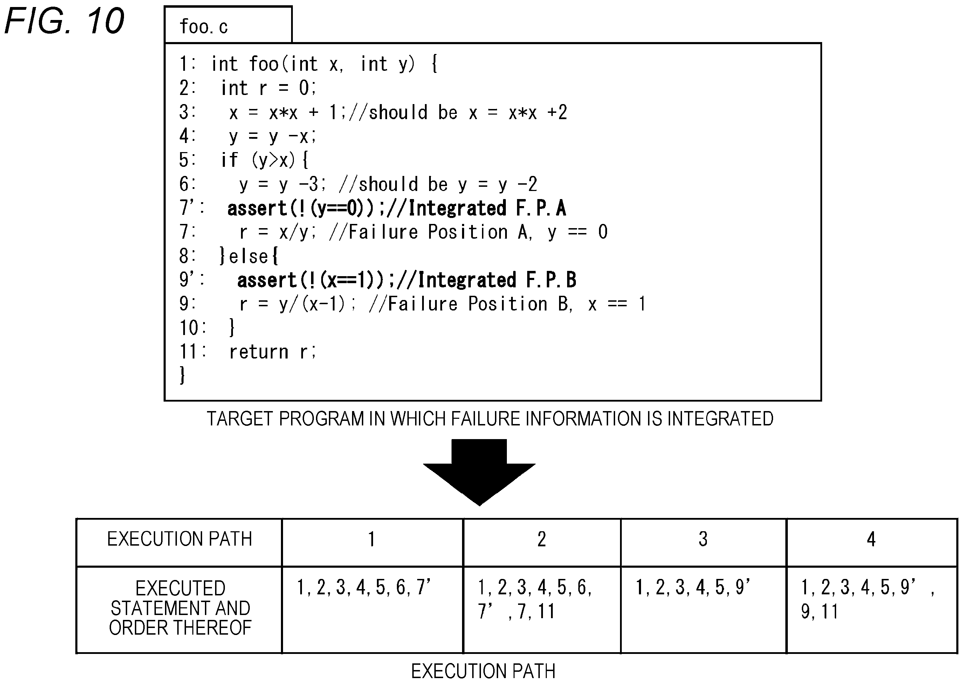

In addition, the failure occurrence path regeneration unit 110 performs symbol execution from a function of the symbol execution analysis route with the smallest execution order (s23). Note that it is assumed that functions of different subroutes can be executed in parallel. Subsequently, the failure occurrence path regeneration unit 110 stores information such as an execution path and a constraint in the storage device 101 (s24). An example of the execution path obtained by such symbol execution is illustrated in Fig. 10.

The failure occurrence path regeneration unit 110 determines whether all the functions of the symbol execution analysis route have been executed (s25).

As a result of the above determination, in a case where not all the functions have been executed (s25: No), the failure occurrence path regeneration unit 110 continues symbol execution of the function subsequent in the execution order (s26).

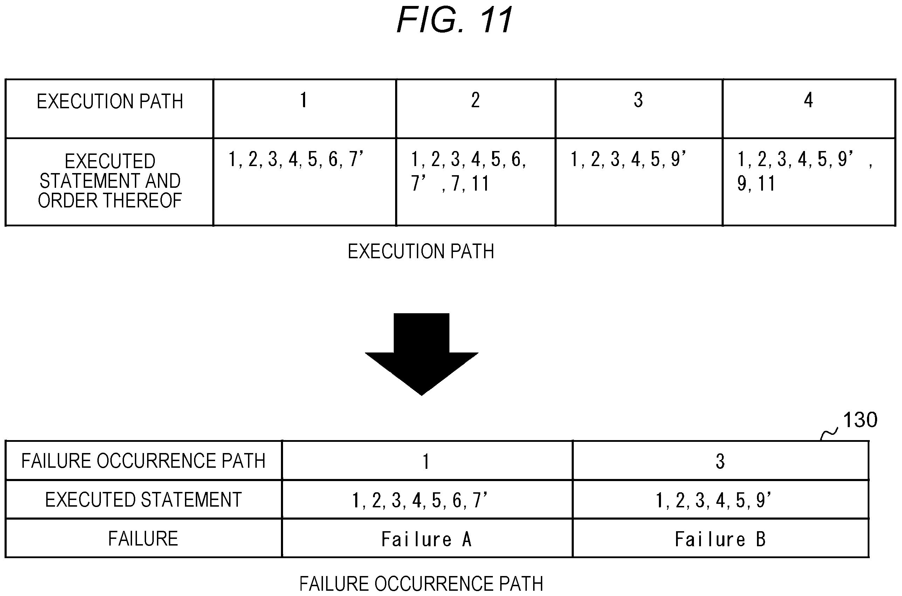

On the other hand, as a result of the above determination, in a case where all the functions have been executed (s25: Yes), the failure occurrence path regeneration unit 110 acquires the failure occurrence paths 130 that are execution paths ended by the integrated failure position (see Fig. 11) (s27) and ends the processing.

### <Flow example: failure occurrence path regeneration by log analysis>

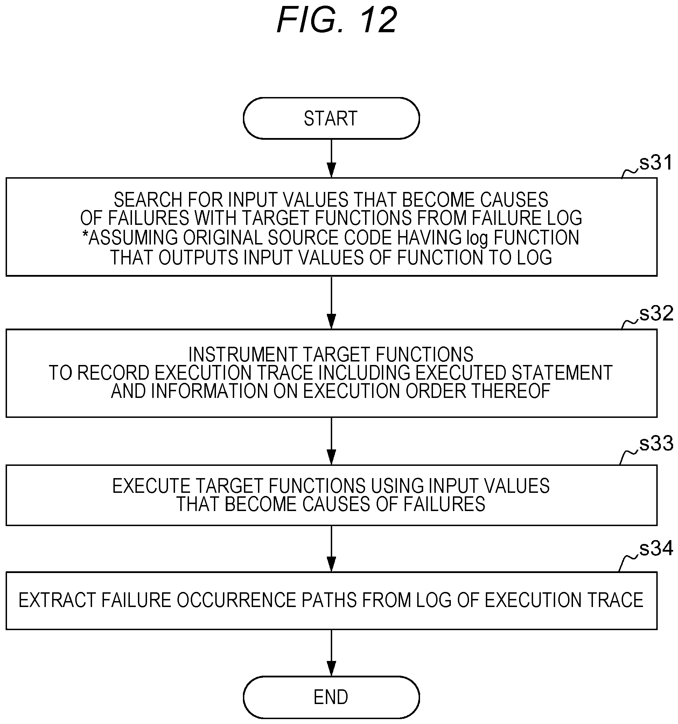

Next, failure occurrence path regeneration processing by log analysis constituting the failure occurrence path regeneration (s1) in the main flow described above will be described with reference to Figs. 12 to 15. Here, the generation (s2) of the failure occurrence graph 131 will also be described.

In this case, the failure occurrence path regeneration unit 110 searches the failure log 126 for input values that become causes of the failures in the target functions (s32). Note that an original source code 125 having a log function that outputs input values of a function to a log is assumed.

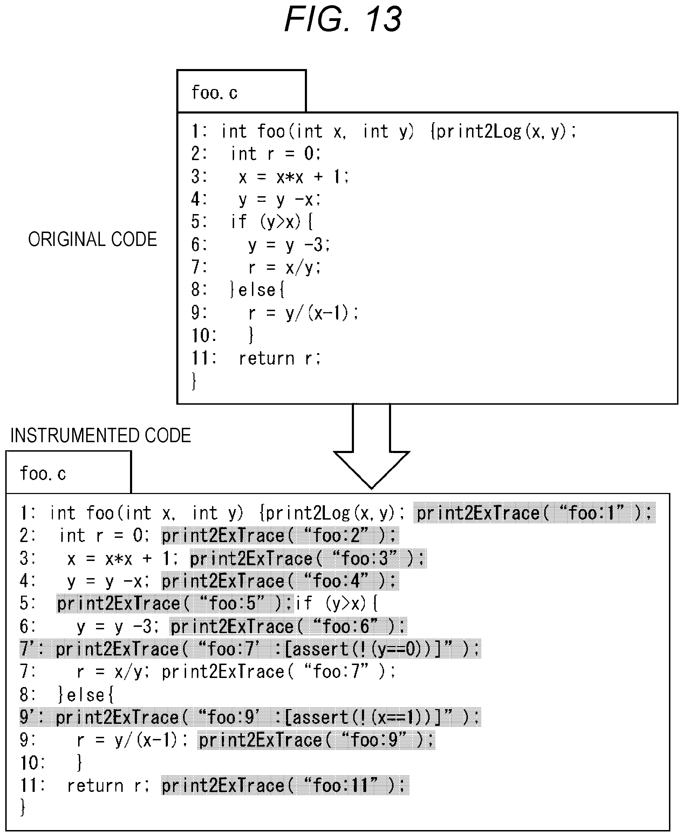

In addition, the failure occurrence path regeneration unit 110 instruments (see Fig. 13) the target functions in order to record the execution trace including the executed statement and the information on the execution order (s32).

Subsequently, the failure occurrence path regeneration unit 110 executes the above-described target functions using the input values that become the causes of the failures searched in s31 (s33).

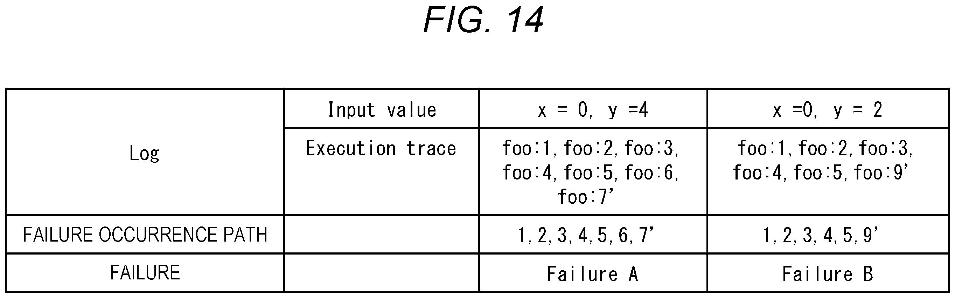

In addition, the failure occurrence path regeneration unit 110 extracts the failure occurrence paths from the log of the execution trace obtained in s33 (see Fig. 14) (s34) and ends the processing.

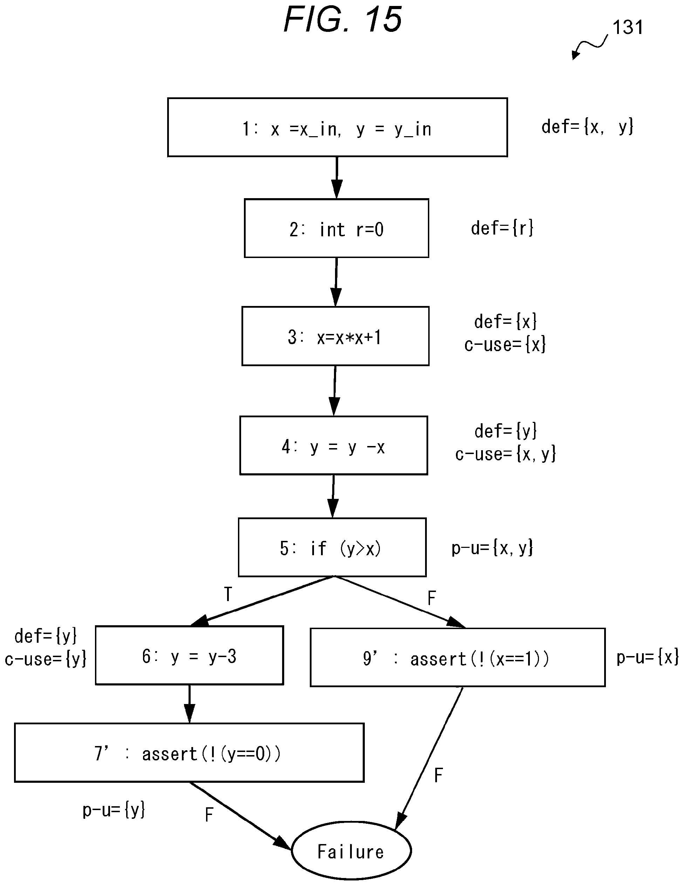

As described above, the failure analysis support device 100, which has regenerated the failure occurrence paths, merges the occurrence paths 130 of all the failures obtained in s1 and generates the failure occurrence graph 131 (see Fig. 15) in which the information on the variable definitions 132 and the usage in the occurrence paths 130 is integrated.

A basic structure of the failure occurrence graph 131 includes nodes in which the definition information (statement) of the failure occurrence paths is set, information (such as failure IDs and path IDs) of the failure occurrence paths passing through the nodes, data flow information which is information on variable definitions and usage (predicate, calculate) in the respective nodes, and edges connecting the nodes in the order described in the failure occurrence paths. Note that the above-described variable receives a new value (initialization or value change) (def = {v}) and is used for calculation of the predicate (p-use = {v}). Also, the variable is used to calculate a value of another variable (c-use = {v}).

### <Flow example: search for instance>

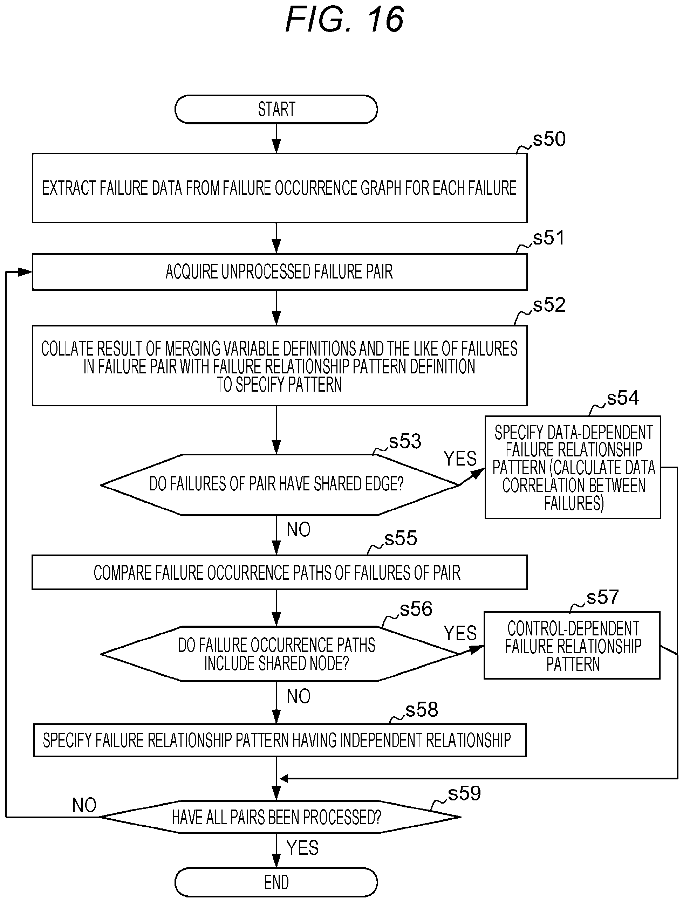

Next, processing of the instance search (s3) in the main flow described above will be described with reference to Figs. 16 to 20.

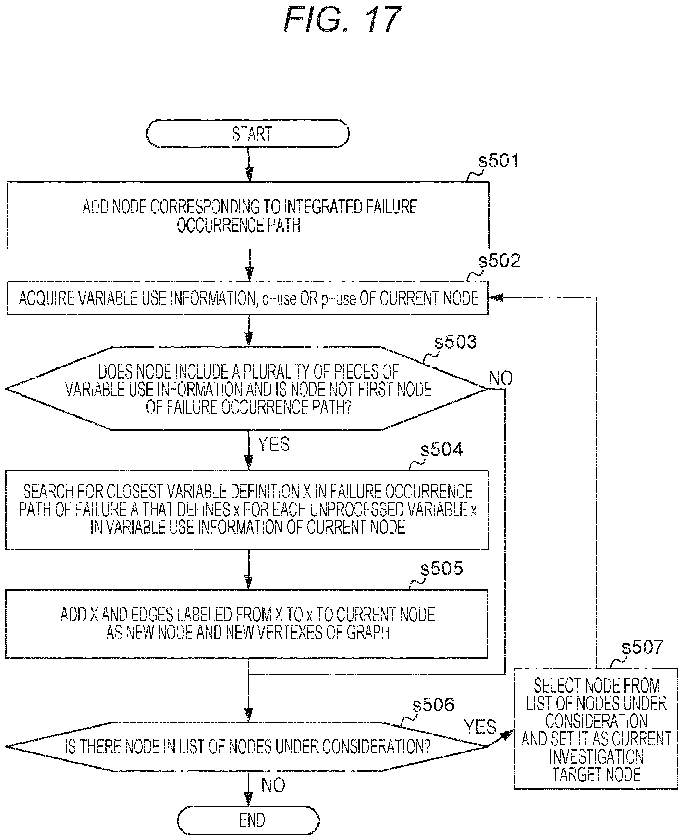

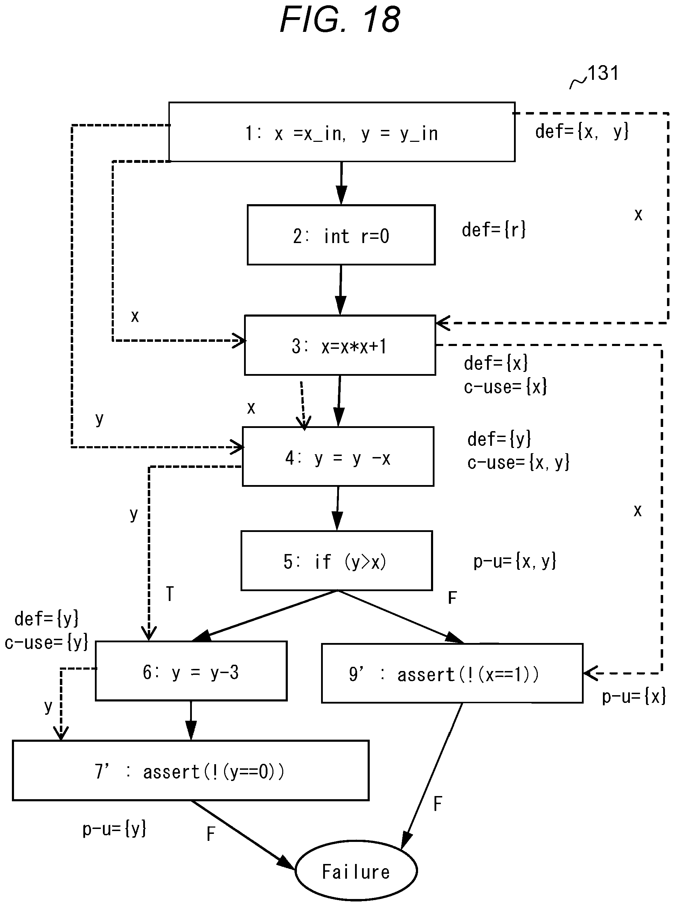

In this case, the failure relationship pattern instance search unit 113 extracts failure data from the failure occurrence graph 131 for each failure (s50). An example of such a failure occurrence graph 131 is illustrated in Fig. 18. Further, details of s50 are illustrated in the flow in Fig. 17.

In this case, the failure relationship pattern instance search unit 113 adds a node (current node) corresponding to the integrated failure occurrence path (s501).

In addition, the failure relationship pattern instance search unit 113 acquires variable use information, c-use, or p-use of the current node (s502).

Subsequently, the failure relationship pattern instance search unit 113 determines whether the node has a plurality of pieces of variable use information and whether the node is the first node in the failure occurrence path (s503).

As a result of the above determination, in a case where the node is the first node (s503: No), the failure relationship pattern instance search unit 113 causes the processing to transition to s506.

On the other hand, as a result of the above determination, in a case where the node is not the first node (s503: Yes), the failure relationship pattern instance search unit 113 searches for the closest variable definition X in the failure occurrence path of the failure A defining x for each unprocessed variable x in the variable use information of the current node (s504).

Subsequently, the failure relationship pattern instance search unit 113 adds X and edges labeled from X to x to the current node as a new node and new vertexes of the graph (s505).

In addition, the failure relationship pattern instance search unit 113 determines whether there is a node in a list of nodes under consideration (s506).

As a result of the above-described determination, in a case where there is a node in the list (s506: Yes), the failure relationship pattern instance search unit 113 selects a node from the list of nodes under consideration, sets the node as the current investigation target node (s507) and returns the processing to s502.

On the other hand, as a result of the above-described determination, in a case where it is determined that there is no node (s506: No), the failure relationship pattern instance search unit 113 ends the processing.

Here, the description returns to the flow in Fig. 16. The failure relationship pattern instance search unit 113 acquires an unprocessed failure pair (s51).

Subsequently, the failure relationship pattern instance search unit 113 collates a result of merging the variable definitions and the like of the failures in the failure pair with the failure relationship pattern definition 127 to specify a pattern (s52).

In addition, the failure relationship pattern instance search unit 113 determines whether the failures of the pair have a shared edge (s53).

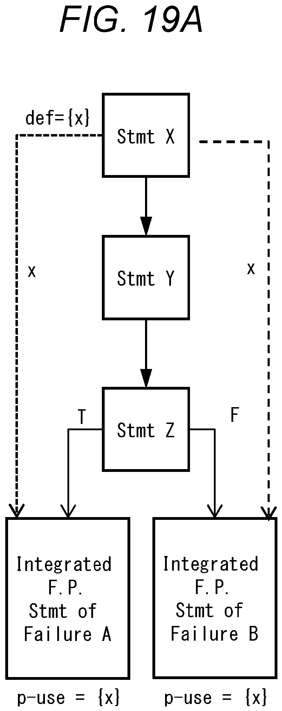

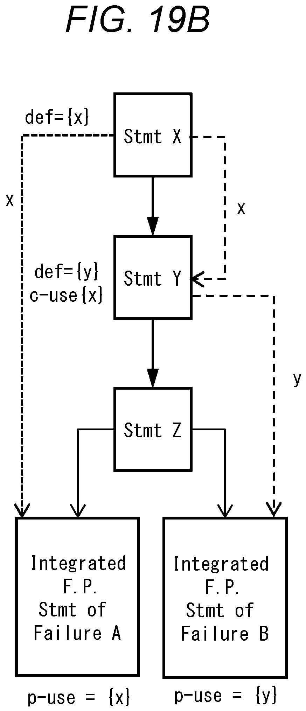

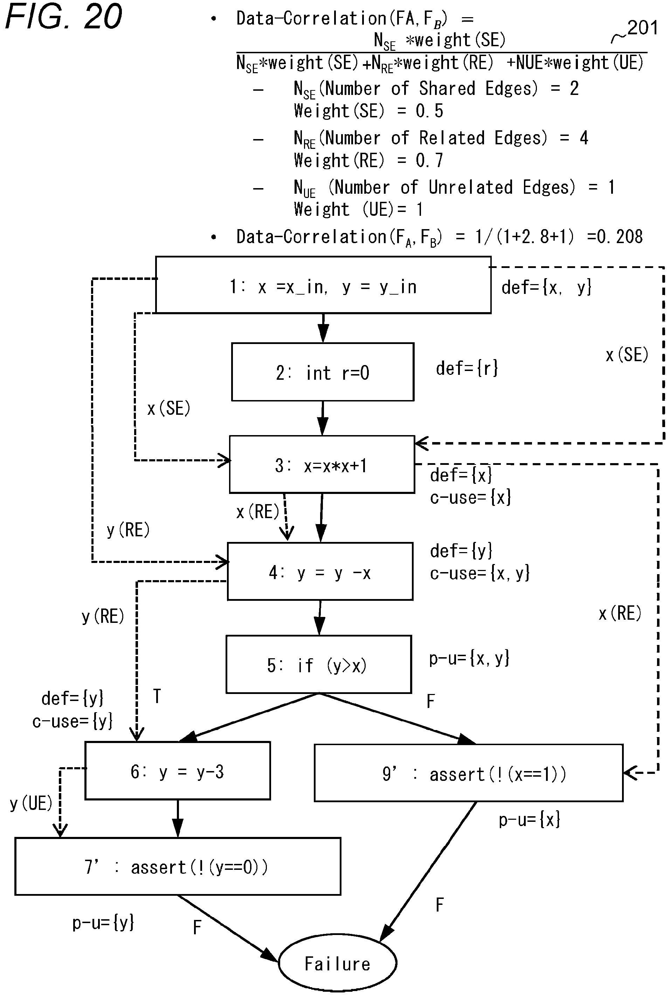

As a result of the above determination, in a case where there is a shared edge (s53: Yes), the failure relationship pattern instance search unit 113 specifies that the pair has a data-dependent failure relationship pattern (Fig. 19A) (s54) and causes the processing to transition to s59. Note that for the pair, data correlation between the failures is calculated on the basis of, for example, a data correlation calculation formula 201 (Fig. 20).

On the other hand, as a result of the above determination, in a case where there is no shared edge (s53: No), the failure relationship pattern instance search unit 113 compares the failure occurrence paths of the failures of the pair (s55).

Subsequently, the failure relationship pattern instance search unit 113 determines whether the failure occurrence paths include a shared node (s56).

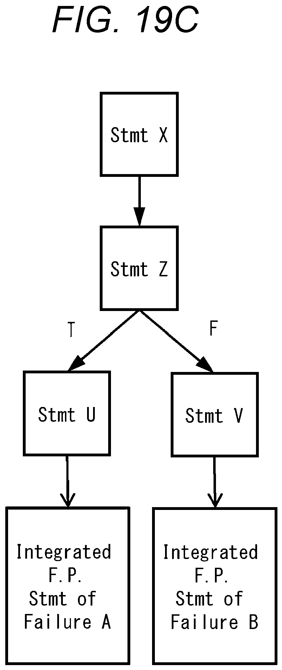

As a result of the above-described determination, in a case where the failure occurrence paths include the shared node (s56: Yes), the failure relationship pattern instance search unit 113 specifies that the pair has a control-dependent failure relationship pattern (Fig. 19C) (s57) and causes the processing to transition to s59. On the other hand, in a case where the failure occurrence paths do not include the shared node as a result of the above-described determination (s56: No), the failure relationship pattern instance search unit 113 specifies that the pair has a failure relationship pattern having an independent relationship (s58).

In addition, the failure relationship pattern instance search unit 113 determines whether all the pairs have been processed (s59).

As a result of the above-described determination, in a case where all the pairs have not been processed (s59: No), the failure relationship pattern instance search unit 113 returns the processing to s51. On the other hand, as a result of the above-described determination, in a case where all the pairs have been processed (s56: Yes), the failure relationship pattern instance search unit 113 ends the processing.

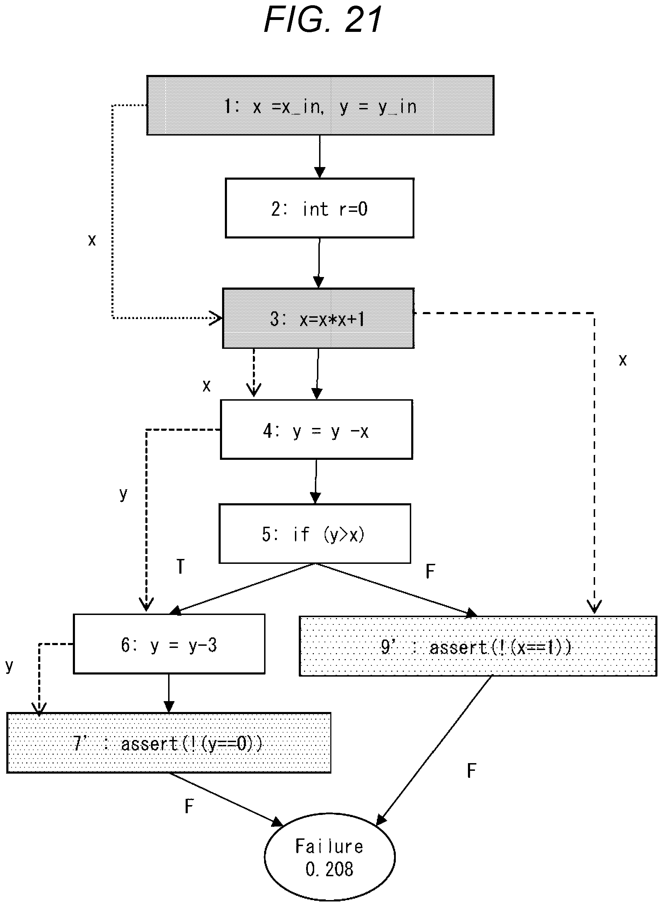

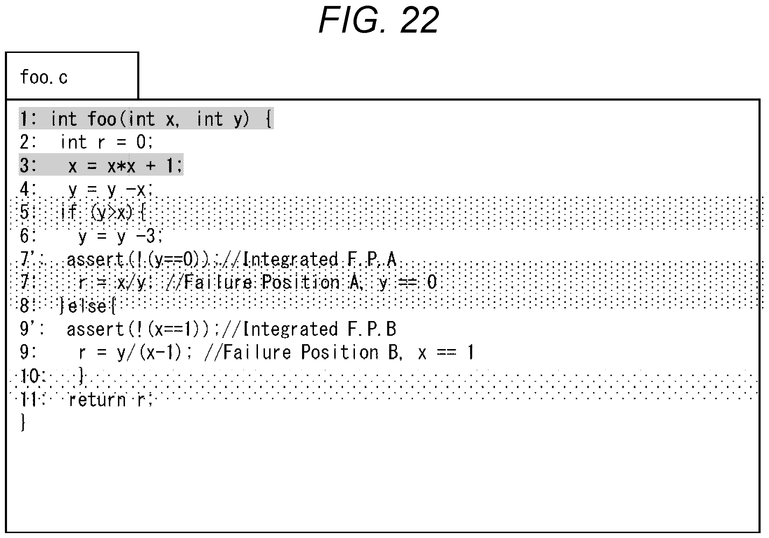

It is preferable that the analysis result display unit 114 in the failure analysis support device 100 of the present embodiment distribute data of the failure occurrence graph 131 obtained so far to, for example, the terminal 5 to display (Fig. 21). Similarly, as described above, the source code (Fig. 22) in which all the failure occurrence paths are merged may be distributed to the terminal 5 and displayed.

Although the best mode, and the like, for carrying out the present invention have been specifically described above, the present invention is not limited thereto, and various modifications can be made without departing from the scope thereof.

According to this embodiment, it is possible to effectively avoid duplication of analysis and correction and to support consistent correction for a plurality of failures included in one program.

The description of the present specification reveals at least the following. In other words, in the failure analysis support device of the present embodiment, when generating the failure occurrence graph, the arithmetic device may set definition information on variables of the occurrence paths of the failures to nodes, set usage of the variables set to the nodes as a data flow and connect the nodes by edges along an order described in the occurrence paths to thereby generate the failure occurrence graph.

According to this, it is possible to efficiently generate paths indicating a failure occurrence state. As a result, it is possible to more effectively avoid duplication of analysis and correction and to support consistent correction for a plurality of failures included in one program.

In the failure analysis support device according to the present embodiment, when searching for the instance, the arithmetic device may execute processing of extracting information including definitions of the variables of the failures, graph elements to be used to describe the definitions of the variables, and usage of all variables appearing in a failure state from the failure occurrence graph for each failure, processing of specifying an unprocessed failure pair, comparing a result of merging the definitions of the variables of failures in the failure pair and the graph elements with the failure relationship pattern and determining a corresponding failure relationship pattern, processing of determining whether the definitions of the variables in the failure pair and the graph elements include a shared edge, processing of comparing occurrence paths of the failures in the failure pair in a case where the definitions of the variables of the failure pair and the graph elements do not include the shared edge as a result of determination regarding the shared edge, determining whether the occurrence paths include a shared node, and specifying that the failures are independent of each other in a case where the occurrence paths do not include the shared node, processing of calculating data correlation between the failures in the failure pair in a case where the definitions of the variables in the failure pair and the graph elements include the shared edge as a result of determination regarding the shared edge, and processing of specifying that the failures have a control-dependent failure relationship in a case where the occurrence paths include the shared node as a result of determination regarding the shared node.

This enables targets to be analyzed and examined to be efficiently specified on the basis of the relationship between the failure occurrence elements. As a result, it is possible to more effectively avoid duplication of analysis and correction and to support consistent correction for a plurality of failures included in one program.

In the failure analysis support method of the present embodiment, when generating the failure occurrence graph, the information processing device may set definition information on variables of occurrence paths of failures to nodes, set usage of the variables set to the nodes as a data flow, and connect the nodes by edges along an order described in the occurrence paths to thereby generate the failure occurrence graph.

In the failure analysis support method according to the present embodiment, the information processing device may execute, when searching for the instance, processing of extracting information on definitions of the variables of failures, graph elements to be used to describe the definitions of the variables, and usage of all variables appearing in a failure state from the failure occurrence graph for each failure, processing of specifying an unprocessed failure pair, comparing a result of merging the definitions of the variables of failures in the failure pair and the graph elements with the failure relationship pattern and determining a corresponding failure relationship pattern, processing of determining whether the definitions of the variables in the failure pair and the graph elements include a shared edge, processing of comparing occurrence paths of the failures in the failure pair in a case where the definitions of the variables in the failure pair and the graph elements do not include the shared edge as a result of determination regarding the shared edge, determining whether the occurrence paths include a shared node, and specifying that the failures are independent of each other in a case where the occurrence paths do not include the shared node, processing of calculating data correlation between the failures in the failure pair in a case where the definitions of the variables in the failure pair and the graph elements include the shared edge as a result of determination regarding the shared edge, and processing of specifying that the failures have a control-dependent failure relationship in a case where the occurrence paths include the shared node as a result of determination regarding the shared node.

## Claims

1. A failure analysis support device (100) comprising:
a storage device (101) configured to store a source code of software to be processed; and
an arithmetic device (104) configured to execute processing of regenerating occurrence paths of all failures on a basis of the source code, processing of merging the occurrence paths of all the failures and generating a failure occurrence graph in which information on variable definitions and usage in the occurrence paths is integrated, processing of searching for an instance corresponding to a failure relationship pattern defined in advance for a relationship between failures in the failure occurrence graph, and processing of outputting a result of the search to a predetermined device.

2. The failure analysis support device (100) according to claim 1, wherein when generating the failure occurrence graph, the arithmetic device (104) sets definition information on variables of the occurrence paths of the failures to nodes, sets usage of the variables set to the nodes as a data flow and connects the nodes by edges along an order described in the occurrence paths to thereby generate the failure occurrence graph.

3. The failure analysis support device (100) according to claim 2, wherein when searching for the instance, the arithmetic device (104) executes
processing of extracting information including definitions of the variables of the failures, graph elements to be used to describe the definitions of the variables, and usage of all variables appearing in a failure state from the failure occurrence graph for each failure,
processing of specifying an unprocessed failure pair, comparing a result of merging the definitions of the variables of failures in the failure pair and the graph elements with the failure relationship pattern and determining a corresponding failure relationship pattern,
processing of determining whether the definitions of the variables in the failure pair and the graph elements include a shared edge,
processing of comparing occurrence paths of the failures in the failure pair in a case where the definitions of the variables of the failure pair and the graph elements do not include the shared edge as a result of determination regarding the shared edge, determining whether the occurrence paths include a shared node, and specifying that the failures are independent of each other in a case where the occurrence paths do not include the shared node,
processing of calculating data correlation between the failures in the failure pair in a case where the definitions of the variables in the failure pair and the graph elements include the shared edge as a result of determination regarding the shared edge, and
processing of specifying that the failures have a control-dependent failure relationship in a case where the occurrence paths include the shared node as a result of determination regarding the shared node.

4. A failure analysis support method, wherein an information processing device
stores a source code of software to be processed in a storage device (101), and
executes processing of regenerating occurrence paths of all failures on a basis of the source code, processing of merging the occurrence paths of all the failures to generate a failure occurrence graph in which information of variable definitions and usage in the occurrence paths is integrated, processing of searching for an instance corresponding to a failure relationship pattern defined in advance for a relationship between failures in the failure occurrence graph, and processing of outputting a result of the search to a predetermined device.

5. The failure analysis support method according to claim 4, wherein when generating the failure occurrence graph, the information processing device sets definition information on variables of occurrence paths of failures to nodes, sets usage of the variables set to the nodes as a data flow, and connects the nodes by edges along an order described in the occurrence paths to thereby generate the failure occurrence graph.

6. The failure analysis support method according to claim 5, wherein the information processing device executes, when searching for the instance,
processing of extracting information on definitions of the variables of failures, graph elements to be used to describe the definitions of the variables, and usage of all variables appearing in a failure state from the failure occurrence graph for each failure,
processing of specifying an unprocessed failure pair, comparing a result of merging the definitions of the variables of failures in the failure pair and the graph elements with the failure relationship pattern and determining a corresponding failure relationship pattern,
processing of determining whether the definitions of the variables in the failure pair and the graph elements include a shared edge,
processing of comparing occurrence paths of the failures in the failure pair in a case where the definitions of the variables in the failure pair and the graph elements do not include the shared edge as a result of determination regarding the shared edge, determining whether the occurrence paths include a shared node, and specifying that the failures are independent of each other in a case where the occurrence paths do not include the shared node,
processing of calculating data correlation between the failures in the failure pair in a case where the definitions of the variables in the failure pair and the graph elements include the shared edge as a result of determination regarding the shared edge, and
processing of specifying that the failures have a control-dependent failure relationship in a case where the occurrence paths include the shared node as a result of determination regarding the shared node.

## Patentansprüche

1. Fehleranalyseunterstützungsvorrichtung (100), umfassend:
eine Speichervorrichtung (101), die ausgelegt ist, um einen Quellcode von zu verarbeitender Software zu speichern; und
eine arithmetische Vorrichtung (104), die ausgelegt ist, um die Verarbeitung des Regenerierens von Ereignispfaden aller Fehler basierend auf dem Quellcode, die Verarbeitung des Zusammenführens der Ereignispfade aller Fehler und das Erzeugen eines Fehlerereignisgraphen, in dem Informationen über Variablendefinitionen und -verwendung in den Ereignispfaden integriert sind, die Verarbeitung des Suchens nach einer Instanz, die einem Fehlerbeziehungsmuster entspricht, das zuvor für eine Beziehung zwischen Fehlern in dem Fehlerereignisgraphen definiert wurde, und die Verarbeitung des Ausgebens eines Ergebnisses der Suche an eine vorbestimmte Vorrichtung auszuführen.

2. Fehleranalyseunterstützungsvorrichtung (100) nach Anspruch 1, wobei, wenn der Fehlerereignisgraph erzeugt wird, die arithmetische Vorrichtung (104) Definitionsinformationen über Variablen der Ereignispfade der Fehler auf Knoten einstellt, die Verwendung der Variablen, die auf die Knoten eingestellt sind, als Datenfluss einstellt und die Knoten durch Kanten entlang einer Reihenfolge, die in den Ereignispfaden beschrieben ist, verbindet, um dadurch den Fehlerereignisgraphen zu erzeugen.

3. Fehleranalyseunterstützungsvorrichtung (100) nach Anspruch 2, wobei, wenn nach der Instanz gesucht wird, die arithmetische Vorrichtung (104) Folgendes ausführt:
Verarbeiten des Extrahierens von Informationen, einschließlich Definitionen der Variablen der Fehler, Graphelementen, die zu verwenden sind, um die Definitionen der Variablen zu beschreiben, und der Verwendung aller Variablen, die in einem Fehlerzustand aus dem Fehlerereignisgraphen für jeden Fehler erscheinen,
Verarbeiten des Angebens eines nichtverarbeiteten Fehlerpaars, des Vergleichens eines Ergebnisses des Zusammenführens der Definitionen der Variablen von Fehlern in dem Fehlerpaar und den Graphelementen mit dem Fehlerbeziehungsmuster und Bestimmen eines entsprechenden Fehlerbeziehungsmusters,
Verarbeiten des Bestimmens, ob die Definitionen der Variablen in dem Fehlerpaar und den Graphelementen eine gemeinsame Kante umfassen,
Verarbeiten des Vergleichens von Ereignispfaden der Fehler in dem Fehlerpaar in einem Fall, in dem die Definitionen der Variablen des Fehlerpaars und der Graphelemente die gemeinsame Kante als Ergebnis der Bestimmung in Hinblick auf die gemeinsame Kante nicht enthalten, des Bestimmens, ob die Ereignispfade einen gemeinsamen Knoten umfassen und des Angebens, dass die Fehler in einem Fall, wenn die Ereignispfade den gemeinsamen Knoten nicht enthalten, voneinander unabhängig sind,
Verarbeiten des Berechnens einer Datenkorrelation zwischen den Fehlern in dem Fehlerpaar in einem Fall, in dem die Definitionen der Variablen in dem Fehlerpaar und den Graphelementen die gemeinsame Kante als Ergebnis der Bestimmung in Hinblick auf die gemeinsame Kante enthalten, und
Verarbeiten des Angebens, dass die Fehler eine steuerabhängige Fehlerbeziehung in einem Fall aufweisen, in dem die Ereignispfade den gemeinsamen Knoten als Ergebnis der Bestimmung in Hinblick auf den gemeinsamen Knoten enthalten.

4. Fehleranalyseunterstützungsverfahren, wobei eine Informationsverarbeitungsvorrichtung:
einen Quellcode von zu verarbeitender Software in einer Speichervorrichtung (101) speichert und
die Verarbeitung des Regenerierens von Ereignispfaden aller Fehler basierend auf dem Quellcode, die Verarbeitung des Zusammenführens der Ereignispfade aller Fehler und das Erzeugen eines Fehlerereignisgraphen, in dem Informationen über Variablendefinitionen und -verwendung in den Ereignispfaden integriert sind, die Verarbeitung des Suchens nach einer Instanz, die einem Fehlerbeziehungsmuster, das zuvor für eine Beziehung zwischen Fehlern in dem Fehlerereignisgraph definiert wurde, und die Verarbeitung des Ausgebens eines Ergebnisses der Suche an eine vorbestimmte Vorrichtung ausführt.

5. Fehleranalyseunterstützungsverfahren nach Anspruch 4, wobei beim Erzeugen des Fehlerereignisgraphen die Informationsverarbeitungsvorrichtung Definitionsinformationen über Variablen von Ereignispfaden von Fehlern an Knoten einstellt, die Verwendung der Variablen, die an den Knoten eingestellt wurden, als Datenfluss einstellt, und die Knoten durch Kanten entlang einer Reihenfolge, die in den Ereignispfaden beschrieben ist, verbindet, um dadurch den Fehlerereignisgraphen zu erzeugen.

6. Fehleranalyseunterstützungsverfahren nach Anspruch 5, wobei die Informationsverarbeitungsvorrichtung beim Suchen nach der Instanz Folgendes ausführt:
Verarbeiten des Extrahierens von Informationen über Definitionen der Variablen der Fehler, Graphelemente, die zu verwenden sind, um die Definitionen der Variablen zu beschreiben, und über die Verwendung aller Variablen, die in einem Fehlerzustand aus dem Fehlerereignisgraph für jeden Fehler erscheinen,
Verarbeiten des Angebens eines nichtverarbeiteten Fehlerpaars, des Vergleichens eines Ergebnisses des Zusammenführens der Definitionen der Variablen von Fehlern in dem Fehlerpaar und den Graphelementen mit dem Fehlerbeziehungsmuster und
Verarbeiten des Bestimmens, ob die Definitionen der Variablen in dem Fehlerpaar und den Graphelementen eine gemeinsame Kante umfassen,
Verarbeiten des Vergleichens von Ereignispfaden der Fehler in dem Fehlerpaar in einem Fall, in dem die Definitionen der Variablen des Fehlerpaars und der Graphelemente die gemeinsame Kante als Ergebnis der Bestimmung in Hinblick auf die gemeinsame Kante nicht enthalten, des Bestimmens, ob die Ereignispfade einen gemeinsamen Knoten umfassen und des Angebens, dass die Fehler in einem Fall, wenn die Ereignispfade den gemeinsamen Knoten nicht enthalten, voneinander unabhängig sind,
Verarbeiten des Berechnens einer Datenkorrelation zwischen den Fehlern in dem Fehlerpaar in einem Fall, in dem die Definitionen der Variablen in dem Fehlerpaar und den Graphelementen die gemeinsame Kante als Ergebnis der Bestimmung in Hinblick auf die gemeinsame Kante enthalten, und
Verarbeiten des Angebens, dass die Fehler eine steuerabhängige Fehlerbeziehung in einem Fall aufweisen, in dem die Ereignispfade den gemeinsamen Knoten als Ergebnis der Bestimmung in Hinblick auf den gemeinsamen Knoten enthalten.

## Revendications

1. Dispositif de support d'analyse de défaillance (100), comprenant :
un dispositif de stockage (101) configuré pour stocker un code source de logiciel à traiter ; et
un dispositif arithmétique (104) configuré pour exécuter un traitement de régénération de trajets d'occurrence de toutes les défaillances sur la base du code source, un traitement de fusion des trajets d'occurrence de toutes les défaillances et de génération d'un graphique d'occurrences de défaillance dans lequel des informations sur des définitions de variable et une utilisation dans les trajets d'occurrence sont intégrées, un traitement de recherche d'une instance correspondant à un motif de relation de défaillance défini à l'avance pour une relation entre des défaillances dans le graphique d'occurrences de défaillance, et un traitement de délivrance en sortie d'un résultat de la recherche vers un dispositif prédéterminé.

2. Dispositif de support d'analyse de défaillance (100) selon la revendication 1, dans lequel lors de la génération du graphique d'occurrences de défaillance, le dispositif arithmétique (104) définit des informations de définition sur des variables des trajets d'occurrence des défaillances par rapport à des noeuds, définit une utilisation des variables définies par rapport à des noeuds en tant que flux de données et connecte les noeuds par des bords le long d'un ordre décrit dans les trajets d'occurrence pour générer ainsi le graphique d'occurrences de défaillance.

3. Dispositif de support d'analyse de défaillance (100) selon la revendication 2, dans lequel lors d'une recherche de l'instance, le dispositif arithmétique (104) exécute
un traitement d'extraction d'informations, y compris des définitions des variables des défaillances, des éléments de graphique à utiliser pour décrire les définitions des variables, et une utilisation de toutes les variables apparaissant dans un état de défaillance à partir du graphique d'occurrences de défaillance pour chaque défaillance,
un traitement de spécification d'une paire de défaillances non traitée, de comparaison d'un résultat d'une fusion des définitions des variables de défaillances dans la paire de défaillances et des éléments de graphique avec le motif de relation de défaillance, et de détermination d'un motif de relation de défaillance correspondant,
un traitement de détermination que les définitions des variables dans la paire de défaillances et des éléments de graphique comprennent ou non un bord partagé,
un traitement de comparaison de trajets d'occurrence des défaillances dans la paire de défaillances dans un cas où les définitions des variables de la paire de défaillances et des éléments de graphique n'incluent pas le bord partagé à la suite d'une détermination concernant le bord partagé, de détermination que les trajets d'occurrence incluent ou non un noeud partagé, et de spécification que les défaillances sont indépendantes les unes des autres dans un cas où les trajets d'occurrence n'incluent pas le noeud partagé,
un traitement de calcul de corrélation de données entre les défaillances dans la paire de défaillances dans un cas où les définitions des variables dans la paire de défaillances et les éléments de graphique incluent le bord partagé à la suite de la détermination concernant le bord partagé, et
un traitement de spécification que les défaillances présentent une relation de défaillance dépendante d'un contrôle dans un cas où les trajets d'occurrence incluent le noeud partagé en résultat d'une détermination concernant le noeud partagé.

4. Procédé de support d'une analyse de défaillance, dans lequel un dispositif de traitement d'informations
stocke un code source d'un logiciel à traiter dans un dispositif de stockage (101), et
exécute un traitement de régénération de trajets d'occurrence de toutes les défaillances sur la base du code source, un traitement de fusion des trajets d'occurrence de toutes les défaillances pour générer un graphique d'occurrences de défaillance dans lequel des informations de définitions de variables et d'utilisation dans les trajets d'occurrence sont intégrées, un traitement de recherche d'une instance correspondant à un motif de relation de défaillance défini à l'avance pour une relation entre des défaillances dans le graphique d'occurrences de défaillance, et un traitement de délivrance en sortie d'un résultat de la recherche vers un dispositif prédéterminé.

5. Procédé de support d'analyse de défaillance selon la revendication 4, dans lequel lors de la génération du graphique d'occurrences de défaillance, le dispositif de traitement d'informations définit des informations de définition sur des variables de trajets d'occurrence de défaillances par rapport à des noeuds, définit une utilisation des variables définies par rapport à des noeuds en tant que flux de données et connecte les noeuds par des bords le long d'un ordre décrit dans les trajets d'occurrence pour générer ainsi le graphique d'occurrences de défaillance.

6. Procédé de support d'analyse de défaillance selon la revendication 5, dans lequel le dispositif de traitement d'informations exécute, lors de la recherche de l'instance,
un traitement d'extraction d'informations sur des définitions des variables de défaillances, des éléments de graphique à utiliser pour décrire les définitions des variables, et une utilisation de toutes les variables apparaissant dans un état de défaillance à partir du graphique d'occurrences de défaillance pour chaque défaillance,
un traitement de spécification d'une paire de défaillances non traitée, de comparaison d'un résultat d'une fusion des définitions des variables de défaillances dans la paire de défaillances et des éléments de graphique avec le motif de relation de défaillance, et de détermination d'un motif de relation de défaillance correspondant,
un traitement de détermination que les définitions des variables dans la paire de défaillances et des éléments de graphique comprennent ou non un bord partagé,
un traitement de comparaison de trajets d'occurrence des défaillances dans la paire de défaillances dans un cas où les définitions des variables dans la paire de défaillances et les éléments de graphique n'incluent pas le bord partagé à la suite d'une détermination concernant le bord partagé, de détermination que les trajets d'occurrence incluent ou non un noeud partagé, et de spécification que les défaillances sont indépendantes les unes des autres dans un cas où les trajets d'occurrence n'incluent pas le noeud partagé,
un traitement de calcul de corrélation de données entre les défaillances dans la paire de défaillances dans un cas où les définitions des variables dans la paire de défaillances et les éléments de graphique incluent le bord partagé à la suite de la détermination concernant le bord partagé, et
un traitement de spécification que les défaillances présentent une relation de défaillance dépendante d'un contrôle dans un cas où les trajets d'occurrence incluent le noeud partagé en résultat d'une détermination concernant le noeud partagé.
